# EUROPÄISCHE PATENTSCHRIFT

(11) **EP 2 797 781 B1**
(45) Veröffentlichungstag und Bekanntmachung des Hinweises auf die Patenterteilung: **27.02.2019**
(21) Anmeldenummer: 12812628.1
(22) Anmeldetag: 20.12.2012
(51) Int. Cl.: B60S 1/04

(54) **TRÄGERELEMENT FÜR EINEN WISCHERANTRIEB**
SUPPORT ELEMENT FOR A WIPER DRIVE
ÉLÉMENT DE SUPPORT POUR UN ENTRAÎNEMENT D'ESSUIE-GLACE

(30) Priorität: 30.12.2011 DE 102011090155
(43) Veröffentlichungstag der Anmeldung: 05.11.2014
(73) Patentinhaber: Robert Bosch GmbH, 70442 Stuttgart (DE)
(72) Erfinder: VAN DE ROVAART, Robert-Jan, 77815 Buehl-Neusatz (DE); BENCSIK, Barnabas, 2473 Val (HU)
(86) Internationale Anmeldenummer: PCT/EP2012/076384
(87) Internationale Veröffentlichungsnummer: WO 2013/098187

(56) Entgegenhaltungen:
- EP-A2- 1 155 931
- WO-A1-2008/028678
- CN-Y- 201 317 346
- DE-A1- 19 833 488
- JP-A- 2000 326 829
- US-B1- 6 701 569

## Beschreibung

Die Erfindung betrifft ein Trägerelement bzw. eine Motorkonsole für einen Wischerantrieb. Insbesondere betrifft die Erfindung ein Trägerelement für einen Wischerantrieb einer Wischeranlage an einem Kraftfahrzeug.

### Stand der Technik

Eine Wischeranlage umfasst einen Wischerarm mit einem Wischerblatt, wobei der Wischerarm mittels eines Wischerantriebs in eine Schwenkbewegung um eine Abtriebswelle versetzt wird, so dass das Wischerblatt über einen Wischbereich einer Sichtscheibe geführt wird. Die Sichtscheibe kann insbesondere eine Windschutzscheibe eines Kraftfahrzeugs sein. Der Wischerantrieb ist üblicherweise an einer Karosserie des Kraftfahrzeugs befestigt, wobei die Befestigung in der Lage sein muss, die in einem Normalbetrieb üblichen Kräfte an die Karosserie zu übermitteln. Dazu gehören neben den üblichen Wischkräften auch Spitzenbelastungen, beispielsweise wenn das Wischerblatt beim Wischen gegen ein Hindernis bewegt wird, während eines Abklappens oder Zurückklappens des Wischerarms von der Sichtscheibe oder im Rahmen eines Austauschs des Wischerblatts.

Kollidiert das Kraftfahrzeug mit einer Person, insbesondere einem Fußgänger, so kann ein erhebliches Verletzungsrisiko für den Fußgänger bestehen, wenn beispielsweise dessen Kopf axial auf die Wischerwelle der Antriebseinrichtung trifft. Um eine Verletzung der Person bei einem derartigen Aufprall möglichst gering zu halten, werden unterschiedliche Maßnahmen ergriffen. Eine Maßnahme betrifft das Absenken der Wischerwelle bei übergroßer axialer Belastung.

Dazu ist die Antriebseinrichtung mittels eines Trägerelements, auch Motorkonsole genannt, an der Karosserie befestigt, wobei das Trägerelement eine oder mehrere Sollbruchstellen umfasst, die dazu eingerichtet sind, bei Überschreiten einer vorbestimmten Kraft oder Energie zu brechen. Dadurch kann die Antriebseinrichtung mit der Wischerwelle und gegebenenfalls Teilen des Wischerarms unter seine ursprüngliche Montageposition abtauchen und so aus einem Gefahrenbereich der Person geschoben werden.

Zur Beurteilung eines Gesundheitsrisikos für die Person durch den Aufprall sind Parameter bestimmt, die im sogenannten HIC-Wert (head injury criteria) zusammengefasst sind. Zu diesen Parametern zählt die auf die Antriebseinrichtung wirkende Kraft, um ein Auslösen der Sollbruchstelle herbei zu führen, und die Zeitverzögerung zwischen dem Einleiten der Kraft und dem Brechen der Sollbruchstelle.

US 6,701,569 B1 betrifft eine Vorrichtung zur Lagerung eines Wischerarms an einem Kraftfahrzeug, wobei eine Sollbruchstelle eines Trägerelements bei einem Aufprall einer Person auf das Kraftfahrzeug durch eine geeignete Vorrichtung durchtrennt werden kann.

Um einen verbesserten Unfallschutz einer Person an der Wischeranlage sicherzustellen, ist es Aufgabe der Erfindung, ein Trägerelement mit einer Sollbruchstelle anzugeben, wobei das Trägerelement so gestaltet ist, dass der HIC-Wert positiv beeinflusst ist. Die Erfindung löst diese Aufgabe mittels eines Trägerelements mit den Merkmalen des unabhängigen Anspruchs. Unteransprüche geben bevorzugte Ausführungsformen wieder.

### Offenbarung der Erfindung

Ein erfindungsgemäßes System umfasst ein Trägerelement für einen Wischerantrieb und eine umgebende Struktur zur Befestigung des Trägerelements mit den Merkmalen des unabhängigen Anspruchs
Wirkt eine Belastung auf den Wischerantrieb, welche ausreichend groß ist, um den Spalt zu schließen, so kann durch das Anliegen des Trägerelements an der umgebenden Struktur eine verbesserte Kraftübertragung mit verringerter Elastizität erreicht werden, welche es erlaubt, das Bruchverhalten des Trägerelements an der Sollbruchstelle verbessert zu kontrollieren. Dazu muss die Sollbruchstelle nicht auf eine geringere Last ausgelegt werden, wodurch das Trägerelement üblicherweise auch für einen Normalbetrieb geschwächt würde. Ferner kann durch die beschriebene Vorrichtung eine Latenzzeit zwischen dem Einleiten der Kraft und dem Brechen des Trägerelements an der Sollbruchstelle verringert sein, so dass eine durch das Trägerelement während der Bruchbelastung aufgenommene Energie verringert sein kann.

Am Auflageabschnitt ist ein Vorsprung ausgebildet, der sich in Richtung der umgebenden Struktur erstreckt. Dadurch kann die Breite des Spalts im unbelasteten Zustand seitens des Trägerelements bestimmt werden. Gegebenenfalls kann der Vorsprung auf einfache Weise in seinen Ausmaßen an vorbestimmte Anforderungen, insbesondere unterschiedliche Kraftfahrzeuge, angepasst werden.

In einer anderen Ausführungsform, die mit der vorgenannten Ausführungsform kombinierbar ist, kann der Vorsprung auch an der umgebenden Struktur angeordnet sein. In diesem Fall erstreckt sich der Vorsprung bevorzugterweise von der umgebenden Struktur in Richtung des Trägerelements.

In einer weiteren Ausführungsform liegt der Vorsprung im Bereich des Auflageabschnitts außermittig, um bei Anlage zwischen dem Trägerelement und der umgebenden Struktur eine Torsionskraft auf das Trägerelement auszuüben. Die Torsionskraft kann zusätzlich zu einer Biegekraft auf die Sollbruchstelle wirken, so dass das Bruchverhalten an der Sollbruchstelle durch die im Normalbetrieb nicht auftretende Torsionsbelastung noch besser kontrollierbar sein kann.

Im Bereich des Auflageabschnitts kann auch eine außermittige Aussparung vorgesehen sein, die dem Vorsprung gegenüberliegt, um eine Torsion des Trägerelements zu erlauben. Ein Verdrehungswinkel des Trägerelements im Bereich des Auflageabschnitts und gegebenenfalls im Bereich der Sollbruchstelle kann so vergrößert sein.

In einer Ausführungsform erstreckt sich der Vorsprung quer über das gesamte Trägerelement. Dabei kann der Spalt entlang des Vorsprungs konstante Breite aufweisen oder abnehmen, wodurch der oben beschriebene Effekt der zusätzlichen Torsionskraft erzielt werden kann.

Der Anlagebereich liegt zwischen der Sollbruchstelle und dem Befestigungselement. Wirksame Hebel am Trägerelement, insbesondere bezüglich der Aufnahme für den Wischerantrieb, können so vorteilhaft nutzbar sein. Außerdem kann durch einen geringen Abstand zwischen dem Auflagebereich und der Lagerstelle die Definition des Spalts erleichtert sein.

In einer bevorzugten Ausführungsform weist das Trägerelement eine vorbestimmte elastische Verformbarkeit auf. Die Abhängigkeit der Breite des Spalts von der auf das Trägerelement bzw. den Wischerantrieb wirkenden Kraft kann dadurch definiert sein.

In einer Ausführungsform ist ein elastisches Element bzw. ein Entkopplungselement zur Anlage zwischen der Lagerstelle und der umgebenden Struktur vorgesehen. Dadurch kann die Übertragung von Körperschall zwischen dem Trägerelement und der umgebenden Struktur reduziert sein. Außerdem kann durch die Elastizität an der Lagerstelle die Definition der Breite des Spalts mit beeinflusst sein.

In einer Variante ist das Trägerelement integriert mit dem Wischerantrieb ausgeführt. Beispielsweise kann das Trägerelement Teil eines Gehäuses des Wischerantriebs sein.

### Kurze Beschreibung der Figuren

Die Erfindung wird nun mit Bezug auf die beigefügten Figuren genauer beschrieben, in denen:
- Figur 1: einen Wischerantrieb an einem Trägerelement eines Kraftfahrzeugs;
- Figur 2: einen Abschnitt des Trägerelements des Wischerantriebs aus Figur 1;
- Figur 3: einen Vorsprung am Trägerelement der vorangehenden Figuren;
- Figur 4: Variationen des Vorsprungs aus Figur 3; und
- Figur 5: Diagramme von Belastungen am Trägerelement nach einer der vorangehenden Figuren
darstellt.

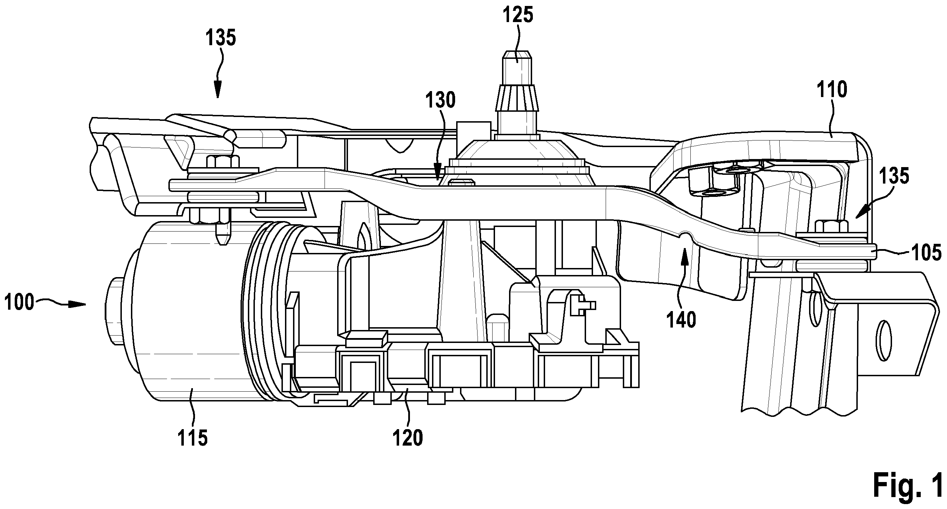

Figur 1 zeigt einen Wischerantrieb 100, der mittels eines Trägerelements 105, einer so genannten Platine, mit einem Karosserieblech 110 eines Kraftfahrzeugs verbunden ist. In alternativen Anwendungen kann an der Stelle des Karosserieblechs 110 auch eine beliebige andere umgebende Struktur verwendet werden, die üblicherweise an einem Kraftfahrzeug im Bereich einer tragenden Struktur zu finden ist. Der Wischerantrieb 100 umfasst einen Elektromotor 115, ein Gehäuse 120 und eine Abtriebswelle 125. Das Trägerelement 105 weist eine Aufnahme 130 zur Befestigung des Wischerantriebs 100, wenigstens zwei Lagerstellen 135 zur Befestigung des Trägerelements 105 am Karosserieblech 110 und eine Sollbruchstelle 140 auf. Eine der Lagerstellen 135 kann ein Steckpunkt zum Einführen in eine korrespondierende Aussparung im Karosserieblech 110 und eine andere Lagerstelle 135 ein Fixierpunkt zur Befestigung beispielsweise mittels einer Schraube oder einer ähnlichen Einrichtung sein. Es können auch mehr Steck- und/oder Fixierpunkte vorgesehen sein.

Das Trägerelement 105 ist vorzugsweise aus einem Kunststoff herstellbar. Zwischen dem Wischerantrieb 100 und der rechten Lagerstelle 135 erstreckt sich ein Arm des Trägerelements 105, an dem die Sollbruchstelle 140 angeordnet ist. Die Sollbruchstelle 140 ist gebildet durch eine oder mehrere gezielte Schwächungen der Struktur des Trägerelements 105.

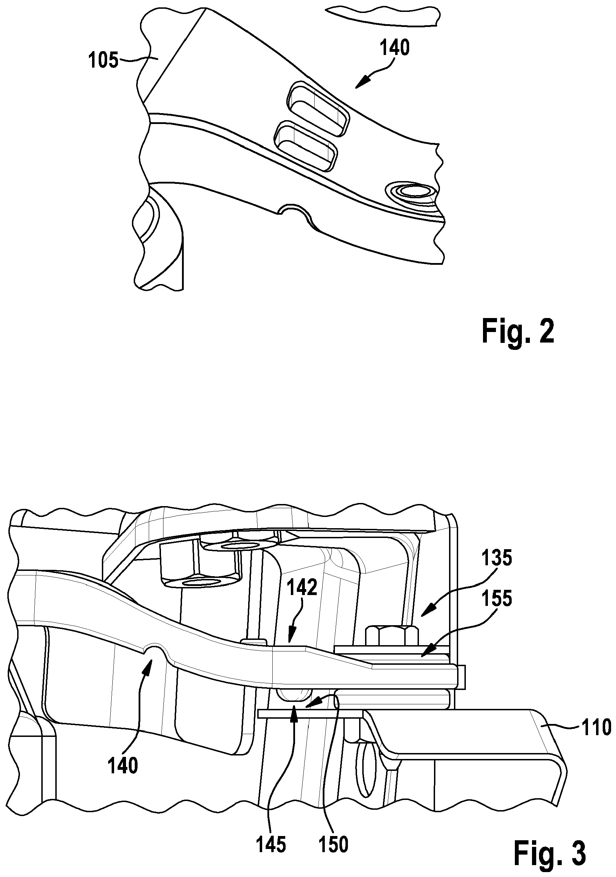

Figur 2 zeigt einen Abschnitt des Trägerelements 105 des Wischerantriebs 100 aus Figur 1. Es ist zu erkennen, dass das Trägerelement 105 im Bereich der Sollbruchstelle 140 einen im Wesentlichen U-förmigen Querschnitt aufweist und die Sollbruchstelle 140 durch Aussparungen an den unterschiedlichen Abschnitten des Profils gebildet ist. Vorzugsweise ist das Trägerelement 105 zu einem gewissen Grad elastisch, so dass das Trägerelement 105 erst dann an der Sollbruchstelle 140 bricht, wenn eine auf die Antriebseinrichtung 100, insbesondere die Wischerwelle 125, wirkende Kraft das Trägerelement 105 bereits um einen vorbestimmten Betrag deformiert hat.

Figur 3 zeigt einen Vorsprung 145 am Trägerelement 105 der vorangehenden Figuren. An dem armförmigen Ausläufer des Trägerelements 105 zur rechten Lagerstelle 135 liegt zwischen der Sollbruchstelle 140 und der Lagerstelle 135 ein Auflageabschnitt 142, von dem aus optional ein Vorsprung 145 nach unten ragt. Der Vorsprung 145 weist vom Trägerelement 105 in Richtung des Karosserieblechs 110. Zwischen dem Auflageabschnitt 142 bzw. dem unteren Ende des Vorsprungs 145 und dem Karosserieblech 110 ist ein Spalt 150 definiert.

Bevorzugterweise ist ein elastisches Element 155 an der Lagerstelle 135 zwischen dem Trägerelement 105 und dem Karosserieblech 110 vorgesehen. Wirkt eine Kraft auf den Wischerantrieb 100, so verformen sich das Trägerelement 105 und das elastische Element 155. Je größer die Kraft ist, insbesondere in axialer Richtung bezüglich der Abtriebswelle 125, desto kleiner wird der Spalt 150. Überschreitet die beschriebene Kraft einen vorbestimmten Wert, so ist der Spalt 150 auf Null reduziert, wodurch das Trägerelement 105 hart am Karosserieblech 110 aufliegt. Ein Bruchverhalten des Trägerelements 105 im Bereich der Sollbruchstelle 140 bei einer ausreichend großen Kraft kann dadurch leichter kontrollierbar sein, ohne das Trägerelement 105 im Bereich der Sollbruchstelle 140 übermäßig zu schwächen.

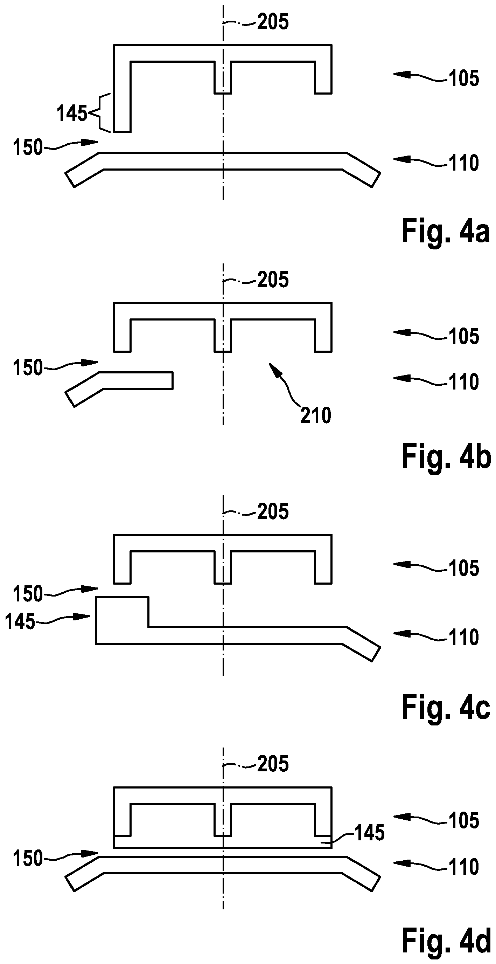

Figur 4 zeigt Variationen des Vorsprungs 145 aus Figur 3. Dargestellt ist ein Querschnitt durch den armförmigen Ausläufer des Trägerelements 105 hin zur rechten Lagerstelle 135.

Figur 4a zeigt eine erste Variation des Vorsprungs 145. Das Profil des Trägerelements 105 erstreckt sich nach links und rechts bezüglich einer Mittellinie 205. Die dargestellte Ausführungsform mit einem horizontalen Steg, an den sich drei nach unten ragende, vertikale Stege anschließen, ist rein exemplarisch, andere Ausführungsformen sind ebenso gut möglich. Links von der Mittellinie 205 erstreckt sich vom Trägerelement 105 der Vorsprung 145 nach unten in Richtung des Karosserieblechs 110. Der Vorsprung 145 kann grundsätzlich an einer beliebigen Stelle bezüglich der Mittellinie 205 ausgebildet sein. Zwischen dem unteren Ende des Vorsprungs 145 und dem Karosserieblech 110 besteht der Spalt 150.

In der dargestellten Ausführungsform befindet sich der Vorsprung 145 außermittig bezüglich der Mittellinie 205, so dass das Trägerelement 105 im Uhrzeigersinn verdreht wird, wenn das Trägerelement 105 so weit auf das Karosserieblech 110 zu bewegt wird, dass der Spalt 150 gänzlich geschlossen ist. Dadurch wird eine Torsionskraft auf das Trägerelement 105 ausgeübt, welche eine zusätzliche Kraft im Bereich der Sollbruchstelle 140 darstellen kann, die im üblichen Betrieb nicht auftritt, und die zu einem raschen Brechen des Trägerelements 105 an der Sollbruchstelle 140 führt.

Figur 4b zeigt eine Ausführungsform, bei der kein zusätzlicher Vorsprung 145 vorgesehen ist, sondern eine Aussparung 210 im Karosserieblech 110, um das oben mit Bezug auf Figur 4a beschriebene Tordieren des Trägerelements 105 zu bewirken. Die Aussparung 210 kann auf einer beliebigen Seite der Mittellinie 205 liegen. Bei Kombination dieser Ausführungsform mit der in Figur 4a gezeigten Ausführungsform können der Vorsprung 145 und die Aussparung 210 einander bezüglich der Mittellinie 205 gegenüberliegen.

Figur 4c zeigt eine Ausführungsform, bei der der Vorsprung 145 am Karosserieblech 110 ausgebildet ist. Diese Ausführungsform ist mit den anderen Ausführungsformen von Figur 4 kombinierbar; insbesondere kann ein weitere Vorsprung 145 am Trägerelement 105 ausgebildet sein, der dem dargestellten Vorsprung 145 am Karosserieblech 110 vertikal gegenüber steht. Die beiden Vorsprünge 145 können einander auch bezüglich der Mittellinie 205 gegenüberliegen, so dass keine oder nur eine geringe Torsionskraft auf das Trägerelement 105 ausgeübt wird.

Figur 4d zeigt eine Ausführungsform, bei der der Vorsprung 145 sich quer über die gesamte Breite des Trägerelements 105 erstreckt. Auch diese Ausführungsform ist mit den anderen Ausführungsformen von Figur 4 kombinierbar. In einer Variante kann der Vorsprung 145 auch keilförmig sein, so dass die Breite des Spalts 150 von links nach rechts ab- oder zunimmt. Dadurch kann die beschriebene Torsionskraft auf das Trägerelement 105 ausgeübt werden.

Allgemein gilt, dass in den Figuren 4a bis 4d die gezeigten und oben beschriebenen Merkmale alternativ am Trägerelement 105 oder am Karosserieblech 110 ausgebildet sein können. Außerdem sind die Merkmale untereinander frei kombinierbar.

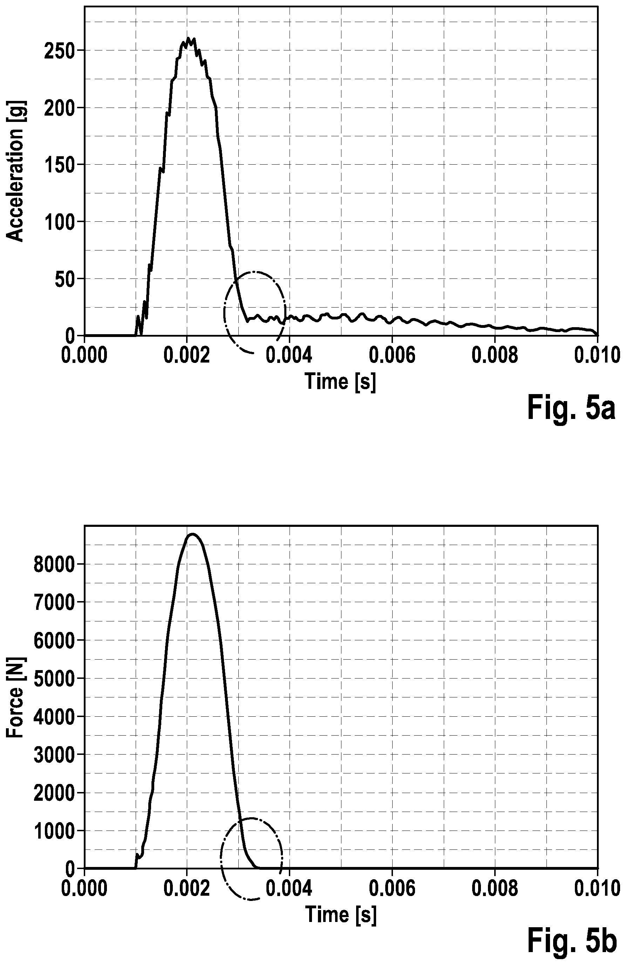

Figur 5 zeigt Diagramme von Belastungen am Trägerelement 105 nach einer der Figuren 1 bis 4. In horizontaler Richtung ist jeweils eine Zeit angetragen, in vertikaler Richtung ist in Figur 5a eine Beschleunigung in g und in Figur 5b eine Kraft in N angetragen. Die beiden Darstellungen korrespondieren zueinander und beschreiben den selben Bruchversuch.

Zum Zeitpunkt Null wird eine Kraft in den Wischerantrieb 100 eingeleitet, die über einer vorbestimmten Bruchkraft liegt, die ausreicht, um die Sollbruchstelle 140 zu lösen. Aufgrund der elastischen Lagerung des Wischerantriebs 100 mittels des Trägerelements 105 und den elastischen Elementen 155 an den Lagerstellen 135 sowie der Elastizität des Trägerelements 105 selbst steigen Kraft und Beschleunigung im Bereich der Sollbruchstelle 140 erst mit einer gewissen Zeitverzögerung zum Zeitpunkt 1,5 ms an. Anschließend steigen die Kraft und die Beschleunigung rasch an, bis sie zum Zeitpunkt 2,1 ms einen maximalen Wert erreichen. Zu diesem Zeitpunkt beginnt das Trägerelement 105 zu brechen, so dass die Werte nicht weiter ansteigen. Zum Zeitpunkt 3,1 ms sind Kraft und Beschleunigung im Wesentlichen abgeklungen. Die Beschleunigung in Figur 5a oszilliert im weiteren Verlauf noch auf niedrigen Werten, was auf eine Schwingung des abgebrochenen Abschnitts des Trägerelements 105 zurückzuführen ist.

Eine Fläche unter der Beschleunigungskurve von Figur 5a bzw. dem Kraftverlauf von Figur 5b ist proportional zu einer Energie, die das Trägerelement 105 während der Bruchbelastung aufnimmt. Je kleiner diese Fläche jeweils ist, desto geringer ist die Energie und desto besser ist der HIC-Wert. Erfindungsgemäß kann es gelingen, diese Fläche zu verkleinern, indem das Trägerelement früher bricht und so die herrschende Kraft- bzw. Beschleunigung abbaut. Dabei kann zwar durch die Auflage des Auflageabschnitts 142 am Karosserieblech 110 eine Spitzenbelastung durch Kraft bzw. Beschleunigung erhöht sein, obwohl das Flächenintegral verkleinert ist.

Das Biegeverhalten und insbesondere das Bruchverhalten des Trägerelements 105 sind aufgrund der zahlreichen Einflussfaktoren allgemein schwer vorherzusagen. Beispielsweise kann eine Elastizität des Trägerelements 105 abhängig sein von einem Alter, einer vorhergehenden Schädigung durch ultraviolettes Licht, einer Umgebungstemperatur, einer Fertigungstoleranz oder einer Inhomogenität des Materials, aus dem das Trägerelement 105 hergestellt ist. Durch die Auflage des Auflageabschnitts 142 unter Bruchbelastung kann der Bruch des Trägerelements 105 besser kontrolliert ablaufen. Insbesondere kann der Bruch unter besser reproduzierbaren Bedingungen verlaufen, so dass er früher eingeleitet und schneller durchgeführt werden kann. Im Fall einer zusätzlich in das Trägerelement 105 eingeleiteten Torsionskraft können die Bruchbedingungen besonders schnell und zuverlässig hergestellt werden.

## Patentansprüche

1. System, umfassend ein Trägerelement (105) für einen Wischerantrieb (100) und eine umgebende Struktur (110) zur Befestigung des Trägerelements (105), wobei das Trägerelement (105) folgendes umfasst:
- eine Aufnahme (130) zur Anbringung des Wischerantriebs (100);
- eine Lagerstelle (135) zur Befestigung des Trägerelements (105) an der umgebenden Struktur (110);
- ein elastisches Element (155) an der Lagerstelle (135) zwischen dem Trägerelement (105) und der umgebenden Struktur (110),
- wobei das Trägerelement (105) eine Sollbruchstelle (140) aufweist,
- einen Auflageabschnitt (142), der zwischen der Sollbruchstelle (140) und der Lagerstelle (135) liegt,
- wobei am Auflageabschnitt (142) ein Vorsprung (145) ausgebildet ist, der sich in Richtung der umgebenden Struktur (110) erstreckt,
- sodass zwischen dem Vorsprung (145) und der umgebenden Struktur (110) ein vorbestimmter Spalt (150) liegt, dessen Breite von einer auf das Trägerelement (105) wirkenden Kraft abhängig ist,
- so dass der Vorsprung (145) erst dann in Anlage zur umgebenden Struktur (110) gerät, wenn eine vorbestimmte Kraft auf das Trägerelement (105) überschritten ist.

2. System nach Anspruch 2, wobei an der umgebenden Struktur (110) ein Vorsprung (145) ausgebildet ist, der sich in Richtung des Trägerelements (105) erstreckt.

3. System nach Anspruch 2, wobei der Vorsprung (145) im Bereich des Auflageabschnitts (142) außermittig liegt, um bei Anlage zwischen dem Trägerelement (105) und der umgebenden Struktur eine Torsionskraft auf das Trägerelement (105) auszuüben.

4. System nach Anspruch 3, wobei im Bereich des Auflageabschnitts (142) eine außermittige Aussparung vorgesehen ist, die dem Vorsprung (145) gegenüber liegt, um eine Torsion des Trägerelements (105) zu erlauben.

5. System nach einem der vorangehenden Ansprüche, wobei sich der Vorsprung (145) quer über das gesamte Trägerelement (105) erstreckt.

6. System nach einem der vorangehenden Ansprüche, wobei das Trägerelement (105) eine vorbestimmte elastische Verformbarkeit aufweist.

7. System nach einem der vorangehenden Ansprüche, ferner umfassend ein elastisches Element (155) zur Anlage zwischen der Lagerstelle (135) und der umgebenden Struktur (110).

8. System nach einem der vorangehenden Ansprüche, wobei das Trägerelement (105) mit dem Wischerantrieb (100) integriert ausgeführt ist.

## Claims

1. System comprising a support element (105) for a wiper drive (100) and a surrounding structure (110) for securing the support element (105), wherein the support element (105) comprises the following:
- a receptacle (130) for attaching the wiper drive (100) ;
- a bearing point (135) for securing the support element (105) to the surrounding structure (110);
- an elastic element (155) on the bearing point (135) between the support element (105) and the surrounding structure (110),
- wherein the support element (105) has a predetermined breaking point (140),
- a supporting portion (142) which lies between the predetermined breaking point (140) and the bearing point (135),
- wherein a projection (145) which extends in the direction of the surrounding structure (110) is formed on the supporting portion (142)
- such that a predetermined gap (150) lies between the projection (145) and the surrounding structure (110), the width of which gap is dependent on a force acting on the support element (105),
- and therefore the projection (145) only comes into contact with the surrounding structure (110) if a predetermined force on the support element (105) is exceeded.

2. System according to Claim 2, wherein a projection (145) which extends in the direction of the support element (105) is formed on the surrounding structure (110) .

3. System according to Claim 2, wherein the projection (145) lies eccentrically in the region of the supporting portion (142) in order to exert a torsional force on the support element (105) in the event of contact between the support element (105) and the surrounding structure.

4. System according to Claim 3, wherein an eccentric recess is provided in the region of the supporting portion (142), said recess lying opposite the projection (145) in order to permit torsion of the support element (105).

5. System according to one of the preceding claims, wherein the projection (145) extends transversely over the entire support element (105).

6. System according to one of the preceding claims, wherein the support element (105) has predetermined elastic deformability.

7. System according to one of the preceding claims, furthermore comprising an elastic element (155) for contact between the bearing point (135) and the surrounding structure (110).

8. System according to one of the preceding claims, wherein the support element (105) is integrated with the wiper drive (100).

## Revendications

1. Système, comportant un élément de support (105) pour un entraînement d'essuie-glace (100) et une structure environnante (110) destinée à la fixation de l'élément de support (105), l'élément de support (105) comportant les éléments suivants :
- un logement (130) servant au montage de l'entraînement d'essuie-glace (100) ;
- un point d'appui (135) servant à la fixation de l'élément de support (105) à la structure environnante (110) ;
- un élément élastique (155) sur le point d'appui (135) entre l'élément de support (105) et la structure environnante (110),
- l'élément de support (105) comprenant un point destiné à la rupture (140),
- une partie d'appui (142) qui se situe entre le point destiné à la rupture (140) et le point d'appui (135),
- une saillie (145) étant formée sur la partie d'appui (142), laquelle saillie s'étend en direction de la structure environnante (110),
- de telle sorte qu'un interstice prédéfini (150) se situe entre la saillie (145) et la structure environnante (110), interstice dont la largeur est dépendante d'une force agissant sur l'élément de support (105),
- de telle sorte que la saillie (145) ne vienne en appui par rapport à la structure environnante (110) que lorsqu'une force prédéfinie sur l'élément de support (105) est dépassée.

2. Système selon la revendication 2, dans lequel une saillie (145) est formée sur la structure environnante (110), laquelle saillie s'étend en direction de l'élément de support (105).

3. Système selon la revendication 2, dans lequel la saillie (145) se situe de manière excentrée dans la région de la partie d'appui (142), afin d'exercer une force de torsion sur l'élément de support (105) lors de l'appui entre l'élément de support (105) et la structure environnante.

4. Système selon la revendication 3, dans lequel un évidement excentré est prévu dans la région de la partie d'appui (142), lequel évidement est en regard de la saillie (145), afin de permettre une torsion de l'élément de support (105).

5. Système selon l'une quelconque des revendications précédentes, dans lequel la saillie (145) s'étend transversalement sur tout l'élément de support (105) .

6. Système selon l'une quelconque des revendications précédentes, dans lequel l'élément de support (105) présente une déformabilité élastique prédéfinie.

7. Système selon l'une quelconque des revendications précédentes, comportant en outre un élément élastique (155) pour l'appui entre le point d'appui (135) et la structure environnante (110).

8. Système selon l'une quelconque des revendications précédentes, dans lequel l'élément de support (105) est réalisé de manière intégrée à l'entraînement d'essuie-glace (100).
